# EUROPEAN PATENT APPLICATION

(11) **EP 3 754 157 A1**
(43) Date of publication of application: **23.12.2020**
(21) Application number: 19180437.6
(22) Date of filing: 17.06.2019
(51) Int. Cl.: E21F 13/00, G01C 21/20, G01C 21/34, G05D 1/02

(54) **UNDERGROUND WORKSITE PASSAGE AND MODEL GENERATION FOR PATH PLANNING**

(71) Applicant: Sandvik Mining and Construction Oy, 33330 Tampere (FI)
(72) Inventor: PUURA, Jussi, 33311 Tampere (FI); KOUVO, Mr. Mikko, 111 20 Stockhlö (SE); VERHO, Mr. Samuli, 33330 Tampere (FI); JUNTUNEN, Raimo, 33330 Tampere (FI); VALTEE, Mikko, 33311 Tampere (FI)
(74) Representative: Sandvik

(57) **Abstract**

According to an example aspect of the present invention, there is provided a method, comprising: obtaining a sub-set of points of a three-dimensional worksite model of an underground tunnel, generating, on the basis of the sub-set of points, a drivability map comprising drivability data indicative of drivability of a vehicle at a set of locations in the tunnel, the drivability map comprising a first point associated with first drivability data and a second point associated with second drivability data different than the first drivability data, and specifying a path for a vehicle in the underground tunnel on the basis of the drivability map.

## Description

### FIELD

The present invention relates to modelling of underground worksites and in particular to underground worksite passage and model generation for path planning.

### BACKGROUND

Underground worksites, such as hard rock or soft rock mines, typically comprise a variety of operation zones intended to be accessed by different types of mobile work machines, herein referred to as vehicles. An underground vehicle may be an unmanned, e.g. remotely controlled from a control room, or a manned vehicle, i.e. operated by an operator sitting in a cabin of the vehicle. Vehicles operating in underground work sites may be autonomously operating, i.e. automated or semi-automated vehicles, which in their normal operating mode operate independently without external control but which may be taken under external control at certain operation areas or conditions, such as during states of emergencies. Path planning of such vehicles to drive an optimal path is of importance for operation efficiency. In some systems, an experienced operator may teach an optimal path by driving the vehicle.

WO2015106799 discloses a system for scanning surroundings of a vehicle for producing data to determining position and orientation of the vehicle. The vehicle is provided with a reference point cloud data of the mine. The control unit is configured to match second point cloud data produced by a scanning device of the vehicle to the reference point cloud data in order to determine position data of the vehicle. Changed point cloud objects may be detected and new point cloud data may be incorporated to the reference point cloud data. If the mine vehicle is a rock drilling rig or a reinforcing rig, it may scan the surroundings when it stops at a work site for executing drilling or feeding reinforcing elements or material. It may also be defined that the scanning is executed at least once each time when the mine vehicle is not moving. Thus, the mine may be surveyed repeatedly and in parallel to the normal operational process, and the 3D reference model of the mine may thus be accurate and updated.

### SUMMARY

The invention is defined by the features of the independent claims. Some specific embodiments are defined in the dependent claims.

According to a first aspect of the present invention, there is provided an apparatus, comprising means for performing: obtaining a sub-set of points of a three-dimensional worksite model of an underground tunnel, generating, on the basis of the sub-set of points, a drivability map comprising drivability data indicative of drivability of a vehicle at a set of locations in the tunnel, the drivability map comprising a first point associated with first drivability data and a second point associated with second drivability data different than the first drivability data, and specifying a path for a vehicle in the underground tunnel on the basis of the drivability map.

The means may comprise at least one processor; and at least one memory including computer program code, the at least one memory and computer program code configured to, with the at least one processor, cause the performance of the apparatus.

According to a second aspect of the present invention, there is provided a method for path planning for vehicles in underground worksite, comprising: obtaining a sub-set of points of a three-dimensional worksite model of an underground tunnel, generating, on the basis of the sub-set of points, a drivability map comprising drivability data indicative of drivability of a vehicle at a set of locations in the tunnel, the drivability map comprising a first point associated with first drivability data and a second point associated with second drivability data different than the first drivability data, and specifying a path for a vehicle in the underground tunnel on the basis of the drivability map.

According to a third aspect, there is provided an apparatus comprising at least one processing core, at least one memory including computer program code, the at least one memory and the computer program code being configured to, with the at least one processing core, cause the apparatus at least to carry out the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

According to a fifth aspect, there is provided an underground vehicle, comprising a body, a tool, a user interface, and a power train, wherein the machine comprises the apparatus according to the first aspect or any embodiment thereof.

According to some embodiments of any of the aspects, the drivability data is vehicle specific drivability data, specific to an automated or semi-automated vehicle or vehicle type. The path and/or the drivability data is generated based on vehicle property data indicative of at least dimensions of the vehicle of the type of the vehicle.

According to an embodiment of any of the aspects, the sub-set of points is a floor model generated on the basis of the three-dimensional worksite model and the first point and the second point are floor model points extracted from the three-dimensional worksite model.

According to an embodiment of any of the aspects, the three-dimensional worksite model comprises three-dimensional point cloud data generated on the basis of scanning the tunnel and the floor model is a point cloud model of the floor comprising a sub-set of points extracted from the three-dimensional point cloud data for representing the floor of the tunnel.

An embodiment of any of the aspects further comprises determining height of a local obstacle at a floor model point, and generating drivability data for the floor model point on the basis of the determined height of the local obstacle.

An embodiment of any of the aspects further comprises determining tunnel height at the first point, and generating drivability data for the first point on the basis of the determined tunnel height.

In an embodiment of any of the aspects, an indication of the tunnel height and/or an indication of non-drivability is included in the drivability map for the first point in response to the tunnel height not exceeding a minimum tunnel height threshold.

In an embodiment of any of the aspects, the tunnel height is determined based on an output of a ray casting operation upwards of the first point.

An embodiment of any of the aspects further comprises receiving or determining vehicle speed for the first point and for the second point, including vehicle speed information as drivability data of the first point and the second point, and selecting the first point or the second point for the path of the vehicle on the basis of the vehicle speed information in the drivability data.

An embodiment of any of the aspects further comprises calculating total driving times for alternative route options for specifying the path on the basis of vehicle speed information in the drivability data of floor points of the route options.

An embodiment of any of the aspects further comprises determining vehicle battery or fuel consumption of the vehicle for the first point and for the second point, and including information of the battery or fuel consumption as drivability data of the first point and the second point, and selecting the first point or the second point for the path of the vehicle on the basis of the vehicle battery or fuel consumption information in the drivability data.

An embodiment of any of the aspects further comprises determining total battery or fuel consumption for alternative route options on the basis of information of the battery or fuel consumption in drivability data of points of the route options, and selecting floor points for the path of the vehicle on the basis of the total vehicle battery or fuel consumption.

Some further embodiments of any of the aspects are illustrated in the dependent claims and below. It will be appreciated that the embodiments may be applied with any of the aspects and in various combinations.

### BRIEF DESCRIPTION OF THE DRAWINGS

FIGURE 1 illustrates an example of an underground work site;
FIGURE 2 illustrates a model of an underground worksite;
FIGURE 3 illustrates a method according to at least some embodiments;
FIGURE 4 illustrates a simplified model generation flow;
FIGURES 5 to 7 illustrate methods according to at least some embodiments;
FIGURE 8 illustrates an example system according to at least some embodiments; and
FIGURE 9 illustrate an apparatus capable of supporting at least some embodiments.

### EMBODIMENTS

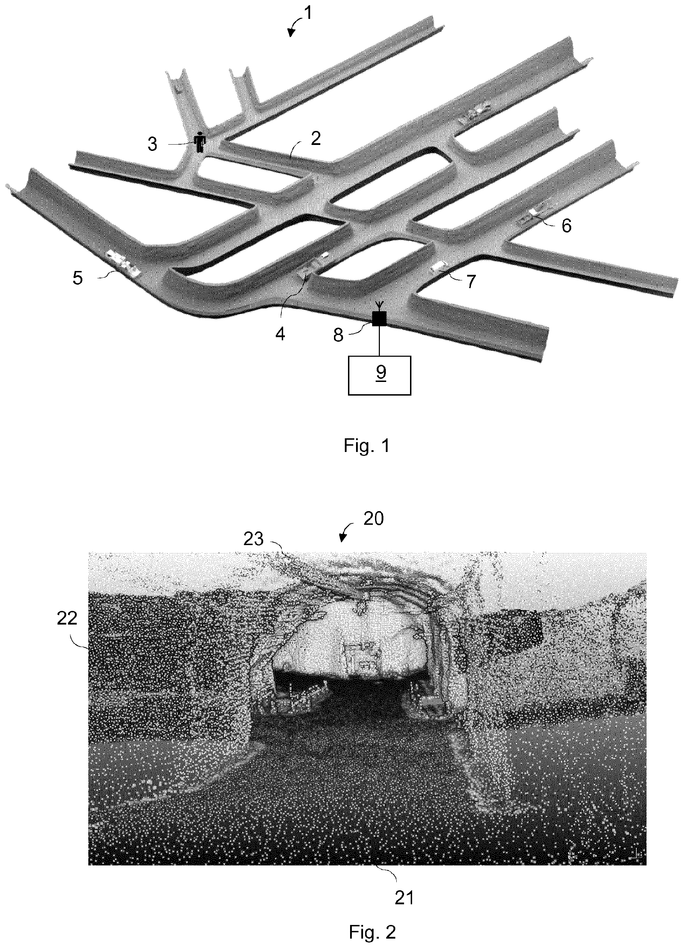

Figure 1 illustrates an underground worksite 1 comprising a network 2 of underground tunnels. A plurality of mobile objects, such as persons or pedestrians 3 and/or vehicles 4, 5, 6, 7 may be present in and move between different areas or operation zones of the worksite 1.

The term underground worksite herein is intended to include a variety of underground worksites, including for example different kinds of underground excavation worksites, such as mines, roadwork sites, and railroad worksites. The term vehicle herein refers generally to mobile work machines suitable to be used in the operation of different kinds of underground mining or construction excavation worksites, such as lorries, dumpers, vans, mobile rock drilling or milling rigs, mobile reinforcement machines, and bucket loaders or other kind of mobile work machines which may be used in different kinds of excavation worksites. The mobile vehicles may be autonomously operating vehicles, which herein refers to automated or semi-automated vehicles. The vehicles 4-7 may comprise a body, a tool, such as a bucket or a drilling unit, at least one control unit configured to control at least some functions and/or actuators of the vehicle, a user interface, power train, wheels, and other components.

The worksite 1 comprises a communications system, such as a wireless access system comprising a wireless local area network (WLAN), comprising a plurality of wireless access nodes 8. The access nodes 8 may communicate with wireless communications units comprised by the vehicles or carried by the pedestrians and with further communications devices 9, such as network device(s) configured to facilitate communications with an on-site (underground or above-ground) or remote control and/or monitoring system server.

The worksite 1 may further comprise various other entities not shown in Figure 1, such as various system elements for power supply, ventilation, communications, and automation. For example, the worksite may comprise a passage control system comprising passage control units (PCU) separating operation zones, some of which may be for autonomously operating vehicles. The passage control system and associated PCUs may be configured to allow or prevent movement of one or more vehicles and/or pedestrians between zones.

Figure 2 illustrates an example of a 3D model of an underground worksite portion and tunnel thereof, illustrating floor 21, walls 22, and ceiling 23 of a tunnel. The 3D model may comprise or be formed based on point cloud data generated on the basis of the scanning. The 3D model may be stored in a database accessible by one or more modules of a computing apparatus, such as a mine model processing module, a user interface or visualizer module, a route planning module, and/or a positioning service module. In other embodiments, the 3D model may be a design model or may be generated on the basis of a design model, such as a CAD model, created by a mine designing software or a 3D model created on the basis of tunnel lines and profiles designed in a drill and blast design software, such as iSURE®. Thus, same analysis or processing can be done on measured or initial planned model of the tunnel environment.

In complex 3D environments, such as underground mines, using the full 3D model of the environment may be too complex and resource consuming. There is now provided improved systems further facilitating path planning for various vehicles on the basis of an underground worksite model, which may also be referred to as an environment model or a tunnel model.

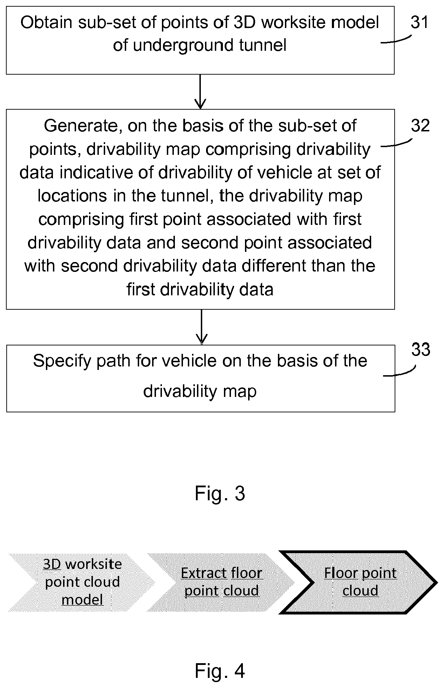

Figure 3 illustrates a method for vehicle path designing for an underground worksite. The method may be implemented by an apparatus configured for processing a model for an underground worksite, such as a server, a worksite operator, designer, or controller workstation, a mobile unit, a vehicle on-board control device, or other kind of appropriately configured data processing device. The apparatus may be configured to perform a model processing or generation algorithm which may carry out a model processing procedure.

A sub-set of points of a 3D worksite model of an underground tunnel is obtained 31. Thus, the sub-set may be extracted or generated on the basis of the worksite model indicative of an underground tunnel, or an already generated point sub-set data may be received from a memory or another device. It is to be appreciated that the term tunnel herein may refer generally to various underground worksite portions.

A drivability map comprising (augmented) drivability data indicative of drivability of a vehicle at a set of locations in the tunnel is generated 32 on the basis of the sub-set of points. The drivability map, which may also be referred to as drivability model, comprises a plurality of points augmented with drivability data, e.g. a first point associated with first drivability data and a second point associated with second drivability data different than the first drivability data.

A path is specified 33 for a vehicle in the underground tunnel on the basis of the drivability map. Block 33 may comprise defining a route from a start point to an end point by a route planning application or selecting a path among available path options within a tunnel portion by a path planning application, for example. It will be appreciated that Figure 3 illustrates general features of the method facilitating the path specification based on the drivability map for an underground vehicle and various additions and amendments may be applied, some further embodiments being illustrated below.

In some embodiments, the sub-set of points is a floor model generated on the basis of the 3D worksite model and the first point and the second point are floor model points extracted from the 3D worksite model. The term floor model refers generally to a model comprising a set of points indicative of the tunnel floor at least in horizontal plane, i.e. 2D or x, y coordinates. Such points may also be referred to as floor points. More efficient path calculation or location tracking of vehicles may be achieved by a map that only comprises the floor of the mine, with drivability attributes associated with some or all of the floor points.

Also with reference to simplified Figure 4, the 3D worksite model is applied as input to a model processing procedure/algorithm. Floor points among points of the 3D model are identified. This may refer to detecting points on the bottom floor level 21 of the tunnel on the basis of performing one or more evaluation or filtering procedures. The identified floor points are extracted. This may refer to forming a further dataset on the basis of the identified floor points. At least a set of the extracted floor points is applied as a floor model of the tunnel for positioning and/or path planning of a mobile object in the tunnel. For example, the floor model may thus be stored in a database accessible by a positioning unit or application or a path planning unit or application of a worksite server or a mine vehicle. The floor model may be applied as a map of the tunnel and for the path planning, and the floor points may thus be considered as map points.

It is to be appreciated that the floor model does not necessarily define the absolutely lowest bottom level of the underground tunnel, but it may instead be more feasible to extract the floor model and floor points defining accessible areas at some height from the tunnel bottom. As further illustrated in Figure 4, in some embodiments the 3D worksite model comprises 3D point cloud data. The point cloud data may be generated on the basis of scanning the tunnel. The floor model may this be a point cloud model of the floor comprising a sub-set of points extracted from the 3D worksite point cloud model data for representing the floor of the tunnel.

The drivability map may comprise floor point records for the sub-set of floor points of the floor model, wherein at least some of the floor point records comprise augmented drivability data for the vehicle.

In some embodiments only a subset of the points of the 3D worksite model is applied as input data set for floor point identification 31. For example, it may be adequate to use reduced resolution or amount of points, in which case the subset according to the adequate resolution may be uniformly selected e.g. only 40% of the points are selected. For example, the distance between the floor points is in the range between 0.1 to 2 meters. In another example embodiment, the model processing algorithm may be configured to detect and exclude certain portions of the 3D model point cloud that are irrelevant for floor point identification on the basis of an associated indication in such data portions. For example, knowledge of measurement direction based on rough sensor orientation information may be used, if such knowledge is available.

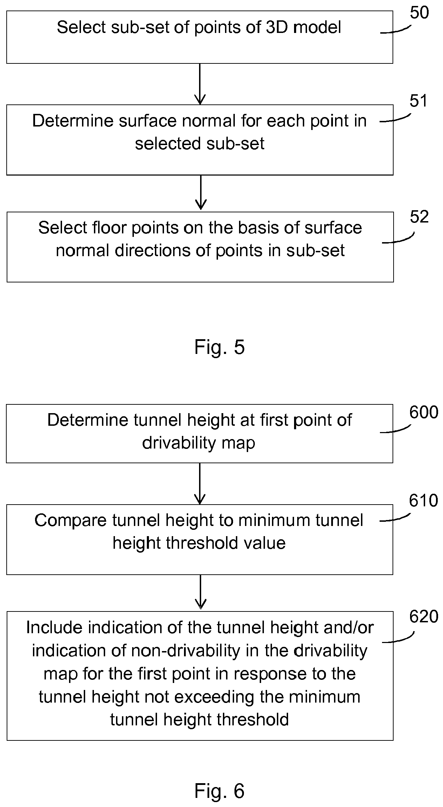

With reference to Figure 5, in an embodiment, the floor points are extracted by performing: A sub-set of points of an input 3D worksite model is selected 50. A surface normal is determined 51 for each of the points in the selected sub-set. The floor points are selected 52 on the basis of the surface normal directions of the points in the sub-set. A point in the subset having its surface normal pointing substantially in the vertical direction may be identified as floor point. Thus, the normal may point substantially downwards or upwards, depending on the selection of the normal direction in or out from the tunnel.

In some embodiments the sub-set of points in block 31 or the floor model is a mesh model and drivability data is generated for mesh edges. A mesh model or map may be generated on the basis of applying meshing of at least part of the 3D worksite model. The mesh model may be further applied for visualization and analysis of the mine. In some embodiments, a visualization map is generated on the basis of the mesh model and/or the floor model.

The drivability map, which may be based on the floor model, may be applied by a route/path planning application for route/path calculation. The application may be configured to calculate a route/path on the basis of the floor model, along the floor defined by the floor points. A simplified floor model and drivability map is beneficial to route planning algorithms instead of full 3D worksite model, since all route planning is naturally happening along the floor where pedestrians and vehicles move. Roof and walls are unnecessary information for the route planning problem. In some embodiments, the drivability map is applied by a navigation application controlling an autonomously operating mobile vehicle. The navigation application may comprise a positioning unit, apply the drivability map for vehicle path definition and/or manoeuvre control along the floor defined by the floor points.

In some embodiments, the drivability data is vehicle specific drivability data, specific to an automated or semi-automated vehicle or vehicle type. The path and/or the drivability data may be generated based on vehicle property data indicative of at least dimensions of the vehicle of the type of the vehicle. Appropriate vehicle property data may be retrieved from a memory or another device on the basis of vehicle or vehicle type identifier received for drivability map generation and/or path planning. For example, load&haul devices of a given series or product family may have particular common dimensions, which are indicated in associated vehicle property data and used to generate the drivability data and/or the path information for these vehicles.

The drivability map may indicate points in the sub-set of points of the worksite model traversable by the vehicle or the vehicle type. For example, the drivability map may comprise a sub-set of points, such as floor points, drivable by the vehicle or vehicle type, or an indication of drivability (drivable or non-drivable) for a vehicle or vehicle type is included in at least some points of the drivability map.

Many implementation options and further embodiments are available for taking into account the vehicle or vehicle type properties, some of which will be further illustrated below. At least some information of further below illustrated embodiments may be stored as vehicle or vehicle type specific (drivability) data, or stored as general information, on the basis of which the drivability map is generated 32 and/or the path is planned 33. When the drivability data is non-vehicle specific, vehicle property data may be applied when processing the drivability data.

In some embodiments, height of a local obstacle is included in the drivability data or used for generating the drivability data. The height of the obstacle may be generated on the basis of floor model and for at least one floor point, and drivability data may be generated for the floor model point on the basis of the determined height of the local obstacle.

In an embodiment, determining the height of the local obstacle at the floor point comprises:
- generating a first plane at a first radius from the floor point,
- generating a second plane at a second radius from the floor point, and
- estimating the height on the basis of comparison of the first plane and the second plane.

Calculation may be performed for every floor point being assessed separately. For example, for every point *p* in the point cloud, neighbors at a first radius or *R1* from *p* are selected. A plane is fit to these selected points and the plane normal n is considered as the normal for the given point. Points at a smaller radius *R2 < R1* within the assessed point *p* are selected. The difference between the minimum and maximum signed distance to the first calculated plane may be calculated. This difference range is the ground clearance requirement at point *p* or the obstacle height at point *p.*

In response to the height of the obstacle exceeding an obstacle height threshold, which may be vehicle or vehicle type specific, an indication of the height of the local obstacle and/or an indication of non-drivability may be included in the drivability map for the floor point. The indication is applied in the path generation, e.g. the respective point may be omitted from available path options or availability of the point may be determined based on the height indication.

As an example, consider a vehicle that has width W of e.g. 2 meters and has a ground clearance value *G,* e.g. 20 centimeters. For path planning we want to find a subset of the floor model where this vehicle can drive without risk of hitting obstacles. The subset can be found from the floor model augmented with the local obstacle height *h.* For every point *p* in the floor model we find the points at a radius of *W*/*2* based on the width *W* of the vehicle in question. If any of the points in the radius has an obstacle height *h* greater than the ground clearance *G,* the point in question will be assigned zero for drivability by this vehicle. If none of the points has an obstacle height higher than *G,* the point is marked true or one for drivability. The result may be a binary map indicating drivability of the vehicle.

The information generated based on the height of the obstacle can be used to extract a subset of the floor model, such as a floor mesh, for path planning 33. When a path is calculated along the graph formed by the edges of this smaller floor mesh, the route will automatically be at a sufficient distance from walls and objects and obstacle free. Using such traveler specific maps, a different route can be given to for example narrow-vein vehicles which can drive through narrow passages. A large vehicle on the other hand requires a certain tunnel width.

In some embodiments, tunnel height is included in the drivability data or used for generating the drivability data. With reference to the method illustrated in Figure 6, tunnel height is determined 600 for at least one point of the drivability map, e.g. the first point. The tunnel height may be defined on the basis of the 3D tunnel model and/or the floor model for a floor point. Drivability data is generated for the first point on the basis of the determined tunnel height. In some embodiments, the tunnel height is compared 610 to a minimum tunnel height threshold value. An indication of the tunnel height and/or an indication of non-drivability is included 620 in the drivability map for the first point in response to the tunnel height not exceeding the minimum tunnel height threshold.

Vehicle height requirement information may be applied in block 32, 620 or the path specification 33 applying the drivability map with the tunnel height information. Thus, the floor model can be augmented by vehicle-specific drivability data (e.g. on non-drivability) on the basis of the local tunnel height and the vehicle height. For example, a low profile drill or a dozer can go where a loader in the same mine cannot.

In an example embodiment, the tunnel height is determined based on an output of a ray casting operation upwards of a floor point being assessed. For every point p in the floor point cloud or every floor mesh vertice, the local height can be obtained by doing a ray cast procedure from the point upwards to the mine mesh model surface. To take into account possible noise in the floor measurement, the ray cast may need to be performed from point *p* + [*0 0 Z*], where *Z* is a value greater than noise of the floor. *Z* can be 0.5 meters, for example. The roof height at the point *p* is then the distance between point *p* and the mesh point hit by the ray cast operation.

This information can be again used to extract a subset of the floor mesh where the floor points are within the limits of the vehicle in question. When a route is calculated along the graph formed by the edges of this smaller floor mesh, the route will automatically be at a sufficient tunnel height.

In an embodiment, calculated ground normal information for a set of floor points are stored and included in the drivability map. The ground normal information may be used to analyze maximum allowed slope for the vehicle.

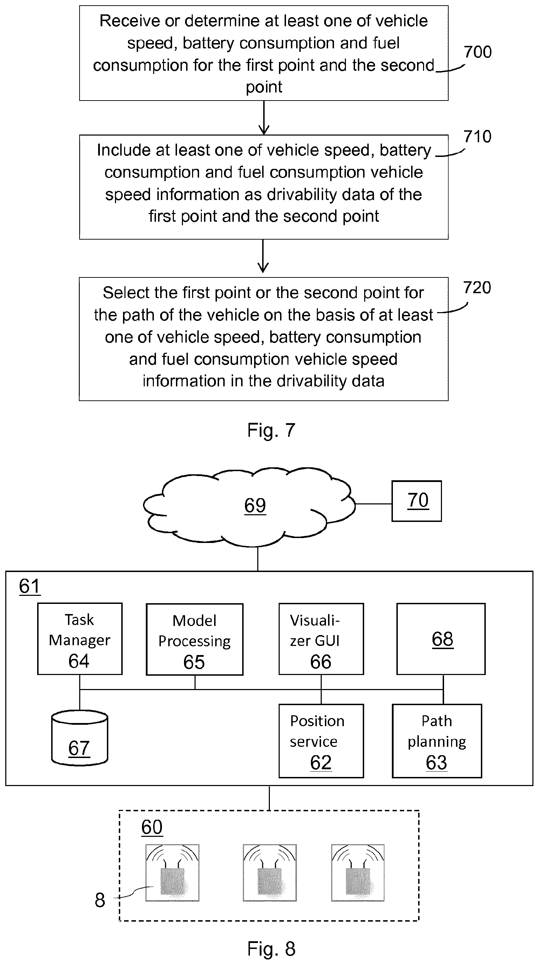

In some embodiments, vehicle speed is included in the drivability data or used for generating the drivability data. With reference to the method illustrated in Figure 7, vehicle speed is received or calculated 700 both for the first point and the second point. Vehicle speed information is included 710 as drivability data of the first point and the second point. The first point or the second point is selected 720 for the path of the vehicle on the basis of the vehicle speed information in the drivability data.

In an embodiment, total driving times for alternative route/path options for specifying the path are calculated on the basis of vehicle speed information in the drivability data of floor points of the route options. Thus, the route/path selection application/algorithm may in block 33 calculate the driving times or receive the driving times as an input and take them in path selection, to optimize or minimize driving time.

The apparatus performing the method of Figure 3 may be configured to determine the shortest route to a location. The apparatus may be configured to calculate an accurate time estimate for the route based on actual speeds along the route, which may be stored as drivability data. It is also then possible to augment the map so that every edge in the mesh gets a cost of distance/speed giving each edge the cost of time. In this mesh, it is now possible to calculate the fastest route from point A to point B.

In some embodiments, battery or fuel consumption is included in the drivability data or used for generating the drivability data. Information of the battery or fuel consumption at a first point and a second point may be received 700 from one or more vehicles 4-7 and included 710 as drivability data of the first point and the second point. The first point or the second point is selected 720 for the path of the vehicle on the basis of the point-specific vehicle battery or fuel consumption information in the drivability data.

In a further embodiment, total battery or fuel consumption is determined for alternative path options on the basis of information of the battery or fuel consumption in drivability data of points of the path options. Floor points for the path of the vehicle are selected on the basis of the total vehicle battery or fuel consumption. For example, if the apparatus is configured to calculate for example the shortest path to a location, it is possible to calculate the amount of battery consumed (or charged) along the path.

In a further example embodiment, cost of battery consumption is determined for the first point and the second point on the basis of the battery or fuel consumption information and vehicle speed at the point. The first point or the second point is selected for the path of the vehicle on the basis of the cost of vehicle battery consumption. For example, the drivability map may be augmented so that edge points in the mesh are associated with a cost of distance divided by speed at location multiplied by rate of battery use giving each edge the cost of battery consumption. In this mesh, it is now possible to calculate path from point A to point B with least battery consumed. In a still further example embodiment, rate or state of battery is stored in the drivability data and/or taken into account for the path specification 33.

The vehicle speed and/or battery or fuel consumption may be associated with movement direction in the drivability data. Thus, direction information may be stored in drivability data records of drivability map. For example, battery consumption may be different in different directions, e.g. uphill or downhill, or trolley or no trolley, so the consumption information may have to be stored with direction.

At least some of the above illustrated information, such as the battery consumption, on the drivability map can also be transmitted and visualized for an operator, such as in control room products.

It is to be noted that the 3D worksite model may be repetitively updated. For example, a drill rig or a load&haul vehicle may be operate as a mobile surveying device and be configured to scan their operating area in the tunnel at every round to update the model with the excavation progress. In some embodiments, the update of the (mine) 3D model triggers automatic update of the floor model and possible further associated models, such as a surface mesh model, to match the updated model. Hence, also the sub-set of points of the worksite model or the floor model, and the drivability map, may be updated in response to detecting update of the 3D model.

Furthermore, some of the drivability data may be dynamic and repetitively updated. For example, obstacles may be mobile, and obstacle-related drivability data may be repetitively updated. Vehicle or vehicle type specific drivability data may be received from vehicles 4-7 operating at the underground worksite and the drivability map updated on the basis of the received drivability data from the set of vehicles.

According to an embodiment, the vehicle 4-7 provided with a scanning device is serving as a mobile surveying device. The vehicle may execute the surveying continuously when carrying out dedicated normal operations of the vehicle. If the vehicle is a rock drilling rig or a reinforcing rig, it may scan the surroundings when it stops at a work site for executing drilling or feeding reinforcing elements or material. It may also be defined that the scanning is executed at least once each time when the vehicle is not moving. Thanks to this procedure, the mine may be surveyed repeatedly and in parallel to the normal operational process without any need for extra resources. The 3D model and the resulting floor model of the worksite may thus be accurate and updated continuously.

The drivability map may be applied in various ways, only some examples being illustrated herein. In some embodiments, a position and/or status indicator of the vehicle is displayed on a 2D or 3D map based on the drivability map. There may be further user interaction and/or automation functionality further facilitating the operator to monitor and/or control the status of the mine vehicle and autonomous driving actions thereof on the basis the drivability map.

Figure 8 illustrates an example of a system for underground worksite. The system comprises a wireless access network 60 comprising a plurality of access nodes 8 for wireless communication with communication devices of mobile objects 3-7 in the tunnels. The system comprises a server 61, which may comprise one or more above or underground computing units. The server 61 may be configured to perform at least some of the above illustrated features, such as the methods of Figures 3 and 5-7 on the basis of signals received from mobile object(s) via the access network 60.

Figure 8 illustrates operational modules 62-68 of the server 61 according to some embodiments. A path planning module 63 may be configured to perform the block 33 of Figure 3 and provide the path (or route) data to further modules, in some embodiments a task manager module 64. A position service module 62 may define or receive position information of mobile objects in the worksite and provide the position information to other modules.

The server 61 may comprise a task manager or management module 64, which is configured to manage at least some operations at the worksite. For example, the task manager may be configured to assign work tasks for a fleet of vehicles and update and/or monitor task performance and status, which is indicated at a task management GUI.

The server 61 may comprise a model processing module 65, which may generate and maintain one or more models of the underground worksite, such as the floor model, the worksite model and/or the drivability map. In some embodiments, the model processing module 65 is configured to generate the drivability map and store it to the database or storage 67.

The server 61 may comprise a visualizer GUI module 66, which is configured to generate at least some display views for an operator (locally and/or remotely). In some embodiments, the visualizer GUI module 66 is configured to generate, on the basis of the drivability map a drivability view for an operator.

The server 61 may comprise further module(s) 68, such as drivability data generation and/or gathering module, a remote monitoring process and UI module, and/or a cloud dispatcher module configured to provide selected worksite information, such as the mobile object position information to a cloud service.

The system and server 61 may be connected to a further system 70 and/or network 69, such a worksite management system, a cloud service, an intermediate communications network, such as the internet, etc. The system may further comprise or be connected to a further device or control unit, such as a handheld user unit, a vehicle unit, a worksite management device/system, a remote control and/or monitoring device/system, data analytics device/system, sensor system/device, etc.

The server 61 (e.g. the modules 63 and 65) may be configured to provide, upon request or by push transmission, drivability map and/or associated path information for relevant other modules or functions, such as the database 67, the visualizer graphical user interface 66, and/or remote units or systems 70 via one or more networks 69. In the example of Figure 8 the modules are illustrated as inter-connected, but it is to be appreciated that not all modules need to be connectable.

The system may comprise or be connected to a vehicle control unit or module for which the drivability map and/or associated path information on the basis of the drivability map may be transmitted. The vehicle control unit may be provided in each autonomously operating vehicle and be configured to control at least some autonomous operations of the vehicle on the basis of the received information. The vehicle control unit may provide information for at least some of the features illustrated above, such as drivability data for the drivability map.

An electronic device comprising electronic circuitries may be an apparatus for realizing at least some embodiments of the present invention. The apparatus may be comprised in at least one computing device connected to or integrated into a control system which may be part of a worksite control or automation system or a vehicle.

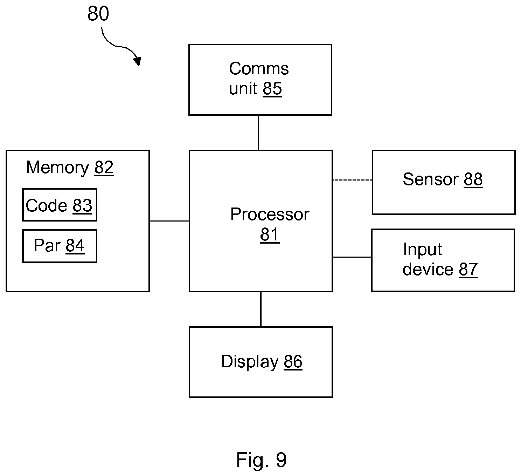

Figure 9 illustrates an example apparatus capable of supporting at least some embodiments of the present invention. Illustrated is a device 80, which may be configured to carry out at least some of the embodiments relating to the drivability map and/or associated path information illustrated above. In some embodiments, the device 80 comprises or implements the server 61 of Figure 8 or one or more of the modules thereof, such as the path planning module, and/or the model processing module 65. In another embodiment, the device is comprised by the vehicle 4-7, such as a vehicle control unit, configured to perform at least some of the embodiments relating to the drivability map illustrated above.

Comprised in the device 80 is a processor 81, which may comprise, for example, a single- or multi-core processor. The processor 81 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 80 may comprise memory 82. The memory may comprise random-access memory and/or permanent memory. The memory may be at least in part accessible to the processor 81. The memory may be at least in part comprised in the processor 81. The memory may be at least in part external to the device 80 but accessible to the device. The memory 82 may be means for storing information, such as parameters 84 affecting operations of the device. The parameter information in particular may comprise parameter information affecting e.g. the drivability map and/or associated path information generation and application, such as threshold values.

The memory 82 may comprise computer program code 83 including computer instructions that the processor 81 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method steps in the device.

The device 80 may comprise a communications unit 85 comprising a transmitter and/or a receiver. The transmitter and the receiver may be configured to transmit and receive, respectively, information in accordance with at least one cellular or non-cellular standard. The transmitter and/or receiver may be configured to operate in accordance with global system for mobile communication, GSM, wideband code division multiple access, WCDMA, long term evolution, LTE, 3GPP new radio access technology (N-RAT), wireless local area network, WLAN, Ethernet and/or worldwide interoperability for microwave access, WiMAX, standards, for example. The device 80 may comprise a near-field communication, NFC, transceiver. The NFC transceiver may support at least one NFC technology, such as NFC, Bluetooth, or similar technologies.

The device 80 may comprise or be connected to a UI. The UI may comprise at least one of a display 86, a speaker, an input device 87 such as a keyboard, a joystick, a touchscreen, and/or a microphone. The UI may be configured to display views on the basis of the drivability map and/or associated path information. A user may operate the device and control at least some features of a control system, such as the system illustrated in Figure 8. In some embodiments, the user may control a vehicle 4-7 and/or the server via the UI, for example to change operation mode, change display views, modify parameters 84 in response to user authentication and adequate rights associated with the user, etc.

The device 80 may further comprise and/or be connected to further units, devices and systems, such as one or more sensor devices 88 sensing environment of the device 80 and/or movement of the vehicle.

The processor 81, the memory 82, the communications unit 85 and the UI may be interconnected by electrical leads internal to the device 80 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Various described features, structures, or characteristics may be combined in any suitable manner in one or more embodiments. While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. An apparatus, comprising means for performing:
- obtaining (31) a sub-set of points of a three-dimensional worksite model of an underground tunnel,
- generating (32), on the basis of the sub-set of points, a drivability map comprising drivability data indicative of drivability of a vehicle at a set of locations in the tunnel, the drivability map comprising a first point associated with first drivability data and a second point associated with second drivability data different than the first drivability data, and
- specifying (33) a path for a vehicle (4) in the underground tunnel on the basis of the drivability map.

2. The apparatus of claim 1, wherein the drivability data is vehicle specific drivability data, specific to an automated or semi-automated vehicle or vehicle type.

3. The apparatus of claim 1 or 2, wherein the path and/or the drivability data is generated based on vehicle property data indicative of at least dimensions of the vehicle of the type of the vehicle.

4. The apparatus of any preceding claim, wherein the drivability map indicates points in the sub-set of points of the worksite model traversable by the vehicle or the vehicle type.

5. The apparatus of any preceding claim, wherein the sub-set of points is a floor model generated on the basis of the three-dimensional worksite model and the first point and the second point are floor model points extracted from the three-dimensional worksite model.

6. The apparatus of claim 5, wherein the drivability map comprises floor point records for the sub-set of floor points of the floor model, wherein at least some of the floor point records comprise augmented drivability data for the vehicle.

7. The apparatus of any preceding claim, the means being further configured for:
- determining height of a local obstacle at a floor model point, and
- generating drivability data for the floor model point on the basis of the determined height of the local obstacle.

8. The apparatus of claim 7, wherein the determining the height of the local obstacle at the floor model point comprises:
- generating a first plane at a first radius from the floor model point,
- generating a second plane at a second radius from the floor model point, and
- estimating the height on the basis of comparison of the first plane and the second plane.

9. The apparatus of any preceding claim, the means being further configured for:
- determining (600) tunnel height at the first point, and
- generating drivability data for the first point on the basis of the determined tunnel height, and including (620) in the drivability map for the first point an indication of the tunnel height and/or an indication of non-drivability in response to the tunnel height not exceeding a minimum tunnel height threshold.

10. The apparatus of any preceding claim, the means being further configured for:
- receiving or determining (700) vehicle speed for the first point and for the second point,
- including (710) vehicle speed information as drivability data of the first point and the second point, and
- selecting (720) the first point or the second point for the path of the vehicle on the basis of the vehicle speed information in the drivability data.

11. The apparatus of any preceding claim, the means being further configured for:
- determining (700) vehicle battery or fuel consumption of the vehicle for the first point and for the second point, and
- including (710) information of the battery or fuel consumption as drivability data of the first point and the second point, and
- selecting (720) the first point or the second point for the path of the vehicle on the basis of the vehicle battery or fuel consumption information in the drivability data.

12. The apparatus of claim 11, wherein the vehicle speed and/or battery or fuel consumption is associated with movement direction in the drivability data.

13. A method for passage planning for a vehicle in an underground tunnel, comprising:
- obtaining (31) a sub-set of points of a three-dimensional worksite model of an underground tunnel,
- generating (32), on the basis of the sub-set of points, a drivability map comprising drivability data indicative of drivability of a vehicle at a set of locations in the tunnel, the drivability map comprising a first point associated with first drivability data and a second point associated with second drivability data different than the first drivability data, and
- specifying (33) a path for a vehicle (4) in the underground tunnel on the basis of the drivability map.

14. The method of claim 13, wherein the sub-set of points is a floor model generated on the basis of the three-dimensional worksite model and the first point and the second point are floor model points extracted from the three-dimensional worksite model.

15. A computer program comprising code for, when executed in a data processing apparatus, to cause a method in accordance with claims 13 or 14 to be performed.
